**Europäisches Patentamt**

(19) **European Patent Office**

**Office européen des brevets**

(11) Veröffentlichungsnummer: **0 123 169 B1**

(12) **EUROPÄISCHE PATENTSCHRIFT**

(45) Veröffentlichungstag der Patentschrift:
24.06.87

(51) Int. Cl.⁴: **G 06 F 15/40**

(21) Anmeldenummer: **84103500.9**

(22) Anmeldetag: **29.03.84**

(54) **Hybrid-Assoziativspeicher, bestehend aus einem nicht assoziativen Basisspeicher und einer assoziativen Oberfläche.**

(30) Priorität: **30.03.83 DE 3311665**

(43) Veröffentlichungstag der Anmeldung:
**31.10.84 Patentblatt 84/44**

(45) Bekanntmachung des Hinweises auf die Patenterteilung:
**24.06.87 Patentblatt 87/26**

(84) Benannte Vertragsstaaten:
**AT BE CH DE FR GB IT LI NL SE**

(56) Entgegenhaltungen:
**EP - A - 0 036 148
EP - A - 0 047 842
EP - A - 0 048 056
US - A - 4 163 281
US - A - 4 257 110**

**PROCEEDINGS OF THE FALL JOINT COMPUTER CONFERENCE, San Francisco, 9.-11. Dezember 1968, Seiten 949-955, AFIPS, Washington, USA; H.S. STONE: "Associative processing for general purpose computers through the use of modified memories"
IEEE TRANSACTIONS ON COMPUTERS, Band C-17, Nr.8, August 1968, Seiten 758-770, New York, USA; D.J. KUCK: "ILLIAC IV software and application programming"
PROCEEDINGS OF THE SPRING JOINT COMPUTER**

(73) Patentinhaber: **Siemens Aktiengesellschaft Berlin und München, Wittelsbacherplatz 2, D-8000 München 2 (DE)**

(72) Erfinder: **Wolf, Gerhard, Dipl.-Ing., Chopinstrasse 5, D-8000 München 60 (DE)**

(56) Entgegenhaltungen: (Fortsetzung)
**CONFERENCE, Atlantic City, 18.-20. April 1967, Band 30, Seiten 477-481, AFIPS, Washington, USA; D.L. SLOTNICK: "Unconventional systems"**

ACTORUM AG

## Beschreibung

Die Erfindung betrifft einen Hybrid-Assoziativspeicher, entsprechend den Merkmalen des Oberbegriffes des Patentanspruches 1.

Hybrid-Assoziativspeicher ermöglichen im Gegensatz zu reinen Assoziativspeichern durch die Kombination einer assoziativen Oberfläche mit einem konventionellen Zugriffsspeicher als Basisspeicher in einfacher Weise eine fast beliebige Erhöhung der Speicherkapazität, die beispielsweise Voraussetzung für die Bearbeitung grosser Datenmengen ist.

Die assoziative Oberfläche besteht bei einer überwiegenden Anzahl von bekannten Hybrid-Assoziativspeichern aus einer der Bitzahl der gleichzeitig zu prüfenden Datenbits entsprechenden Anzahl von Vergleichern, deren Ausgangssignale von einer Trefferauswertesteuerung überwacht werden. Durch eine zusätzliche Maskensteuerung werden dabei den vorgegebenen Suchkriterien nicht entsprechende Bitstellen von der Überprüfung ausgeschlossen. Die Speicherbreite entspricht dabei in der Regel einem einheitlich zu prüfenden Datensatz vorgegebener Länge, wobei die im Basisspeicher gespeicherten Datensätze im einfachsten Fall einzeln nacheinander der assoziativen Oberfläche zugeführt und geprüft werden.

Vielfach sind daher, um die Prüfdauer für alle im Basisspeicher gespeicherten Datensätze zu verringern, in einer zweidimensional ausgebildeten assoziativen Oberfläche durch entsprechende Vervielfachung Prüfmöglichkeiten für die gleichzeitige Prüfung einer vorgegebenen Anzahl von Datensätzen vorgesehen, und der Basisspeicher ist entsprechend dreidimensional so aufgebaut, dass die gleichzeitig prüfbare Anzahl von Datensätzen gleichzeitig gelesen und zur assoziativen Oberfläche durchgeschaltet werden können – man siehe zum Beispiel data report 11 (1976) Heft 2, Seiten 29 bis 34, EP-AI-00036148.

Nach dem gleichen Prinzip der zweidimensional ausgebildeten assoziativen Oberfläche arbeitet auch der Assoziativspeicher 100 der Anordnung nach der DE-OS 32 16 905, wenn die jeder Assoziativspeicherzelle 110 zugehörigen Register 101 mit Dateneinheiten aus dem Registermodul gefüllt sind und alle Assoziativspeicherzellen gleichzeitig die zur Verfügung gestellten Dateneinheiten überprüfen. Das Operationswerk 105 jeder Speicherzelle 110 besteht anstelle von einzelnen Vergleichern aus einem jeweils die gesamte Dateneinheit erfassenden universell arbeitenden Verknüpfungswerk zur Ausführung von beliebigen assoziativen und sonstigen Verknüpfungsfunktionen.

Von Nachteil bei beiden Lösungen ist, dass von den einheitlich zu prüfenden Dateneinheiten vielfach nur ein Teil jeweils zur Prüfung benötigt und der nicht benötigte Teil durch die Maskensteuerung abgedeckt werden muss. Die Arbeitskapazität der assoziativen Oberfläche wird daher vielfach nur unzureichend genutzt.

Ein weiteres Problem ergibt sich daraus, dass derartige Hybrid-Assoziativspeicher in der Regel als Bestandteil von umfassenderen Datenverarbeitungsanlagen eingesetzt werden, so dass der Basisspeicher an das Datenleitungssystem der Datenverarbeitungsanlage ohne Schwierigkeiten anschliessbar sein muss, was eine Strukturierung der Speicherabschnitte entsprechend der zu übertragenden Breite einer Dateneinheit erfordert, die vielfach für die assoziative Verknüpfung nicht so geeignet ist, wie eine davon abweichende Datenbreite.

Andererseits sind assoziative Prozessoren bekannt, bei denen durch gesonderte Massnahmen aus einem wortorientierten normalen Zugriffsspeicher entweder ein Wort mit N Bits oder aber ein vorgegebenes Bit von N Wörtern gleichzeitig gelesen werden können. Dies setzt eine Unterteilung des Speichers in Matrizen oder Felder von N × N Bits voraus, wobei die einzelnen Bitspalten getrennt voneinander ansteuerbar sein müssen, so dass mit einer einzigen normalen Wortadresse in jeder Bitspalte ein Bit in jeweils einer anderen Zeile innerhalb einer Matrix gleichzeitig ansteuerbar ist und mit jeder der möglichen Wortadressen jeweils ein anderes Datenwort oder die Bitkombination jeweils einer anderen Bitstelle der N Datenwörter abhängig vom vorgegebenen Betriebsmodus erhalten wird. Die jeweils massgebliche Zeile im Feld wird dabei durch die letzten $\log_2 N$ Bits der Wortadresse bestimmt, während die höherwertigen Bits das Feld festlegen. Durch Adressenumordner werden die letzten $\log_2 N$ Bits dann in N spaltenindividuelle Zeilenadressen umgesetzt. Ausserdem müssen die N Bits der einzelnen Datenwörter noch von Zeile zu Zeile zyklisch verschoben werden, damit die N-Bits für jede Bitstelle in verschiedenen Spalten liegen und gleichzeitig ausgewählt werden können. Dies bewirken zusätzliche Schiebeeinrichtungen beim Ein- und Ausspeichern abhängig ebenfalls von den letzten $\log_2 N$ Bits der jeweils wirksamen Wortadresse – man siehe z.B. PROCEEDINGS OF THE FALL JOINT COMPUTER CONFERENCE, San Francisco, 09. bis 11. Dezember 1968, Seiten 949 bis 955.

Die in ein Ausgaberegister jeweils gelesene Bitkombination wird dann in Verbindung mit weiteren Registern durch gegenseitiges Verschieben und logisches Verknüpfen der verschiedenen Registerinformationen entsprechend einer vorgegebenen Befehlsfolge verarbeitet, wobei gegebenenfalls die einzelnen Bitspalten eines Feldes nacheinander bei entsprechender Wiederholung der Befehlsfolge überprüft werden. Das damit verbundene bitserielle Arbeiten kostet Zeit, wie überhaupt alle Schiebevorgänge. Ausserdem werden wie bei den vorgenannten Hybrid-Assoziativspeichern alle gelesenen Bitkombinationen jeweils als zusammenhängende Einheit verarbeitet. Wenn dabei ausserdem eine grössere Wortlänge von 64 oder 128 Bits als zweckmässig angesehen wird, so bedeutet das einen erheblichen Aufwand für die erforderlichen Adressenumordner und die Bitverschiebeeinrichtungen.

Aufgabe der Erfindung ist es, ausgehend von Hybrid-Assoziativspeichern der eingangs genannten Art diese so zu gestalten, dass sie bei grösserer Anpassungsfähigkeit an verschiedene assoziative Aufgaben eine wesentlich höhere Leistungsfähigkeit aufweisen, ohne dass die Eigenschaften eines an ein Datenleitungssystem einer Datenverarbeitungsanlage mit vorgegebener Übertragungsbreite angeschlossenen normalen Zugriffsspeichers dadurch verlorengehen. Diese Aufgabe wird durch die kennzeichnenden Merkmale des Patentanspruches 1 gelöst.

Die Erfindung nutzt dabei die durch die bekannte Speichertechnik der versetzten Anordnung im Feld mit der wahlweisen Möglichkeit des zeilen- oder spaltenorientierten Zugriffs, damit unabhängig von der Datenbreite des Übertragungssystems die Datensätze beliebiger Länge logisch in Form von vertikalen Strings in einer Speicherspalte gespeichert werden können. Die Speicherbreite jeder Spalte ist aber nicht auf ein Bit der Dateneinheit beschränkt, sondern umfasst Subeinheiten mit mehreren Bits, zum Beispiel acht Bits. Dadurch wird einerseits die Zeilen- und Spaltenzahl je Matrix oder Feld verringert, was einen wesentlich geringeren Aufwand für die notwendigen Adressen- und Datenumordner erfordert. Ausserdem ermöglicht die Bildung von Subeinheiten eine bessere Anpassung an die in der Regel mehr Bit umfassenden Suchkriterien, da diese nicht mehr bitseriell zu überprüfen sind, sondern die zugehörigen Bits gleichzeitig überprüft werden können. Entsprechend können die je Subeinheit einer Dateneinheit in der assoziativen Oberfläche vorgesehenen universellen Verknüpfungseinheiten in der herkömmlichen Weise zusammenarbeitend, eine Dateneinheit mit entsprechender Maskierung parallel überprüfen, oder aber es können entsprechend viele einander korrespondierende Subeinheiten von Dateneinheiten verschiedener Datensätze voneinander getrennt gleichzeitig überprüft werden.

Die Kombination der Merkmale des Patentanspruches 1 ergibt daher insgesamt einen wesentlich verbesserten und leistungsfähigeren Hybrid-Assoziativspeicher als Funktionseinheit zur Durchführung von vielfältigen Assoziationsfunktionen, dessen Leistungsfähigkeit zudem durch eine modulartige Erweiterung zu einer dreidimensionalen Anordnung bei gleichzeitiger Ausnutzung der vorhandenen Adressenumordner vervielfacht werden kann, da alle Subeinheiten einer Speicherebene gleichzeitig zur assoziativen Oberfläche übertragen werden können und nicht erst nacheinander bereitgestellt werden müssen. Diese und andere Weiterbildungen der Erfindung ergeben sich aus den übrigen Patentansprüchen.

Einzelheiten der Erfindung seien nachfolgend anhand von in der Zeichnung dargestellten Ausführungsbeispielen näher erläutert. Im einzelnen zeigen

Fig. 1 ein Prinzipschaltbild des Hybrid-Assoziativspeichers gemäss der Erfindung,

Fig. 2 ein Prinzipschaltbild der zugehörigen Adressensteuerung,

Fig. 3 bis 5 drei Ausführungsbeispiele für den Adressenumordner in Form von Prinzipschaltbildern,

Fig. 6 ein Prinzipschaltbild zur Erläuterung der Einfügung des Datenumordners von Fig. 1 in die verschiedenen Datenflusswege,

Fig. 7 ein Prinzipschaltbild der mit der Adressensteuerung von Fig. 2 koppelbaren Adressenmaskensteuerung

Fig. 8 den prinzipiellen Aufbau eines Basisspeichers von Fig. 1 aus mehreren Speichergruppen mit gemeinsamem Adressenumordner und

Fig. 9 die Kopplung eines Pufferspeichers mit dem Basisspeicher von Fig. 8 in prinzipieller Darstellung.

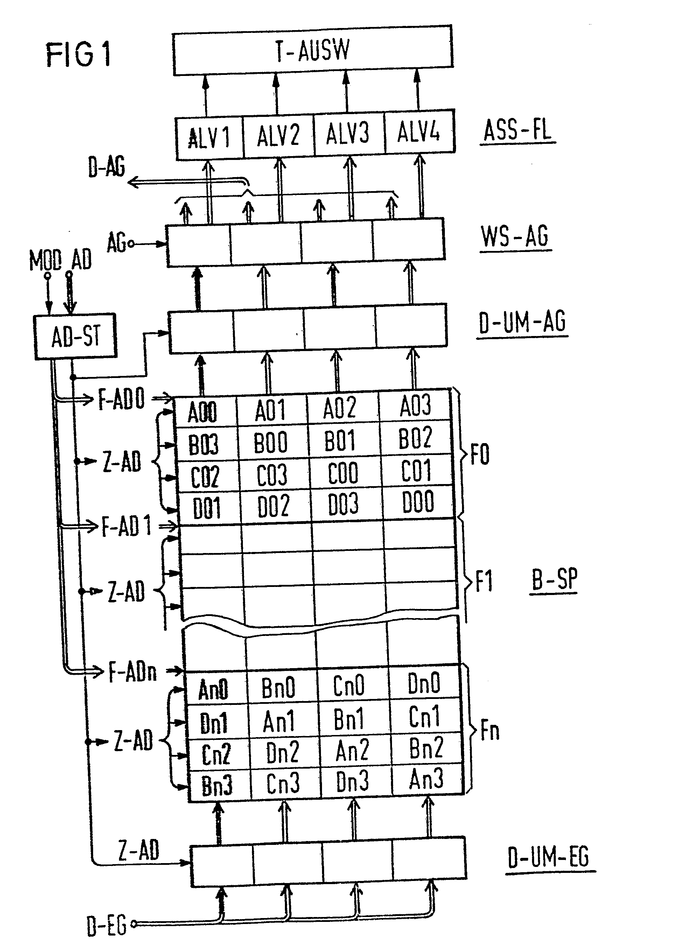

Der in Figur 1 gezeigte Hybrid-Assoziativspeicher gliedert sich in herkömmlicher Weise in einen normalen Zugriffsspeicher als Basisspeicher B-SP und eine assoziative Oberfläche ASS-FL mit einer Trefferauswertesteuerung T-AUSW.

Der Basisspeicher B-SP hat eine einer Dateneinheit entsprechende Arbeitsbreite, wobei in herkömmlicher Weise die Dateneinheiten säulenförmig untereinander einschreibbar und auslesbar sind und jede Speicherzeile zur Auswahl einer Dateneinheit einzeln ansteuerbar ist. Jede Dateneinheit ist in Subeinheiten unterteilt; im vorliegenden Falle sind als Dateneinheiten Wörter mit je 4 Byte zu je 8 Bit zugrundegelegt. Abhängig von der Arbeitsbreite des angeschlossenen Datenleitungssystems könnten es auch Doppelwörter mit je 8 Byte sein.

Entsprechend gliedert sich der Basisspeicher B-SP in eine entsprechende Anzahl von vertikalen Bytespalten, die bei der Auswahl einer Dateneinheit oder eines Wortes durch eine zeilenorientierte Zugriffsadresse AD gleichzeitig angesteuert werden, beispielsweise die Dateneinheit A0i mit den 4 Bytes A00, A01, A02, A03 in der ersten Speicherzeile.

Nun sind aber aus noch zu erläuternden Gründen die einzelnen Wörter nicht in gleicher Weise in den einzelnen Speicherzeilen angeordnet, sondern die Anordnung folgt einem vorgegebenen Einordnungsschema, demzufolge es möglich ist, bei einem Speicherzugriff entweder die 4 Bytes eines Wortes in herkömmlicher Weise oder aber die miteinander korrespondierenden Bytes mehrerer vertikal aufeinanderfolgender Wörter gleichzeitig in Form eines Wortes auszulesen.

Entsprechend den gewählten 4 Bytes in jeder Speicherzeile bilden daher entsprechend viele Dateneinheiten oder Wörter jeweils ein Speicherfeld F, z.B. die Wörter A0i, B0i, C0i und D0i für das Feld F0, das durch einen Feldadressteil F-AD = 0 innerhalb der Zugriffsadresse AD ansteuerbar ist. Von Speicherzeile zu Speicherzeile werden dabei die miteinander korrespondierenden Bytes aller Wörter im Feld, also z.B. A00, B00, C00 und D00 für das Feld F0, zyklisch um 1 Byte versetzt angeordnet, so dass die miteinander korrespondierenden Bytes aller Wörter im Feld jeweils auf einer Diagonale liegen, wobei die einzelnen Diagonalen zyklisch umlaufen.

Damit dennoch der herkömmliche Zugriffmechanismus zu den einzelnen Dateneinheiten in den einzelnen Dateneinheitsebenen oder Speicherzeilen nach aussen aufrecht erhalten werden kann, ist für den Zeilenadressteil Z-AD als weiterer Bestandteil der Zugriffsadresse AD neben dem Feldadressteil F-AD eine Umordnung innerhalb der Adressensteuerung AD-ST erforderlich, indem jede Bytespalte des Feldes gesondert mit einer gesonderten Zeilenadresse angesteuert wird. Dies lässt sich ohne Schwierigkeit realisieren, wenn man für die einzelnen Bytespalten getrennte Speicherbausteine verwendet, was für einen Basisspeicher B-SP grösserer Speicherkapazität ohnehin unumgänglich ist.

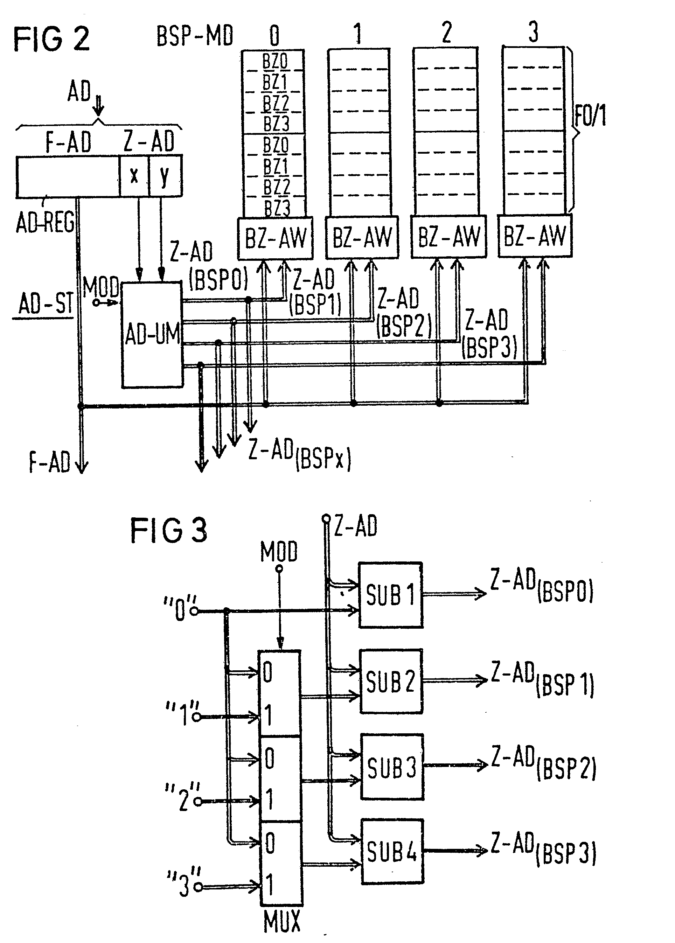

Figur 2 zeigt den prinzipiellen Aufbau eines Doppelfeldes F0/1 im Basisspeicher mit 4 Speicherbausteinen als Bytespaltenmodule BSP-MD0 bis BSP-MD3. Jeder dieser Bausteine hat ein Fassungsvermögen von z.B. 8 Byte, die in zwei Gruppen zu je 4 Bytezeilen BZ0 bis BZ3 gegliedert sind, und jeder Baustein ist mit einer Bytezeilenauswahlsteuerung BZ-AW gekoppelt, über die die Ansteuerung beim Lesen oder Schreiben eines Bytes erfolgt. Liegen die ein Wort bildenden 4 Bytes in einer Dateneinheitsebene, z.B. in der Bytezeile BZ0, dann wird allen Speicherbausteinen BSP-MD... dieselbe Zeilenadresse Z-AD$_{(BSP ...)}$ zugeführt. Liegen die ein Wort bildenden Bytes jedoch diagonal versetzt in unterschiedlichen Dateneinheitsebenen, dann erhalten alle Speicherbausteine unterschiedliche Zeilenadressen Z-AD$_{(BSP0)}$ bis Z-AD$_{(BSP3)}$, wobei in beiden Fällen die Gruppenauswahl je Speicherbaustein durch die gesamte oder einen Teil der Feldadresse F-AD gesteuert wird.

Beim gewählten Ausführungsbeispiel genügen zur Unterscheidung der vier jeweils ein Speicherfeld F... im Basisspeicher B-SP bildenden Speicherzeilen 2 Bit, nämlich X und Y, die die Zeilenadresse Z-AD im Feld bildet. Diese zusammen mit der Feldadresse F-AD in einem Adressenregister AD-REG gespeicherten Zeilenadressbits werden einem Adressenumordner AD-UM zugeführt, der abhängig vom gewählten Betriebsmodus MOD die benötigten Einzeladressen Z-AD$_{(BSP ...)}$ bereitstellt.

Bei dem sich aus dem Speicherfeld F0 des Basisspeichers B-SP in Figur 1 ergebenden Einordnungsschema liegen alle eine Dateneinheit bildenden Bytes in einer Ebene, nur die Reihenfolge der Bytes innerhalb der einzelnen Wörter ist zyklisch vertauscht. Insbesondere beim normalen Speicherbetrieb sind daher jeweils alle in einer Zeile liegenden Bytes anzusteuern, was ein und dieselbe Zeilenansteueradresse Z-AD$_{(BSP ...)}$ in Figur 2 erfordert, während beim Lesen bzw. Schreiben von Dateneinheiten, die aus den miteinander korrespondierenden Bytes aller Wörter im Feld zusammengesetzt werden, für jede Bytespalte unterschiedliche Zeilenadressen Z-AD$_{(BSP0)}$ bis Z-AD$_{(BSP3)}$ zur Verfügung zu stellen sind, und zwar abhängig von dem die zugehörige Dateneinheitsebene im Basisspeicher B-SP kennzeichnenden Zeilenadressteil Z-AD der Zugriffsadresse AD.

Figur 3 zeigt in Form eines Prinzipschaltbildes einen Adressenumordner AD-UM, wie er in Figur 2 verwendet werden kann. Dieser Adressenumordner besteht aus 4 Modulo-4 arbeitenden 2-Bit-Subtrahierern SUB1 bis SUB4, denen als Subtrahend die Ausgangszeilenadresse Z-AD zugeführt wird. Der Minuend besteht jeweils aus einer der möglichen 4 Basisadressen «0», «1», «2» oder «3», deren Zuschaltung entsprechend den beiden Modusarten MOD durch Multiplexer MUX gesteuert wird. Im Normalbetrieb des Basisspeichers B-SP ist der Minuend in Form der Basisadresse «0» für alle Subtrahierer gleich, so dass sich für alle Bytespalten gleiche Zeilenadressen Z-AD$_{(BSP ...)}$ ergeben. Bei der anderen Betriebsart wird die Zeilenadresse Z-AD jeweils von einer der möglichen Basisadressen abgezogen, so dass sich vier unterschiedliche Zeilenadressen Z-AD$_{(BSP0)}$ bis Z-AD$_{(BSP3)}$ entsprechend der Modulo-4-Verschiebung ergeben. Mit fortlaufender Zeilenadresse Z-AD im Feld verschiebt sich also der Beginn der Dateneinheit in zyklischer Folge um jeweils eine Bytebreite, wie in Figur 1 anhand des Feldes F0 gezeigt ist. Anstelle der Subtrahierer können in an sich bekannter Weise auch Addierer verwendet werden.

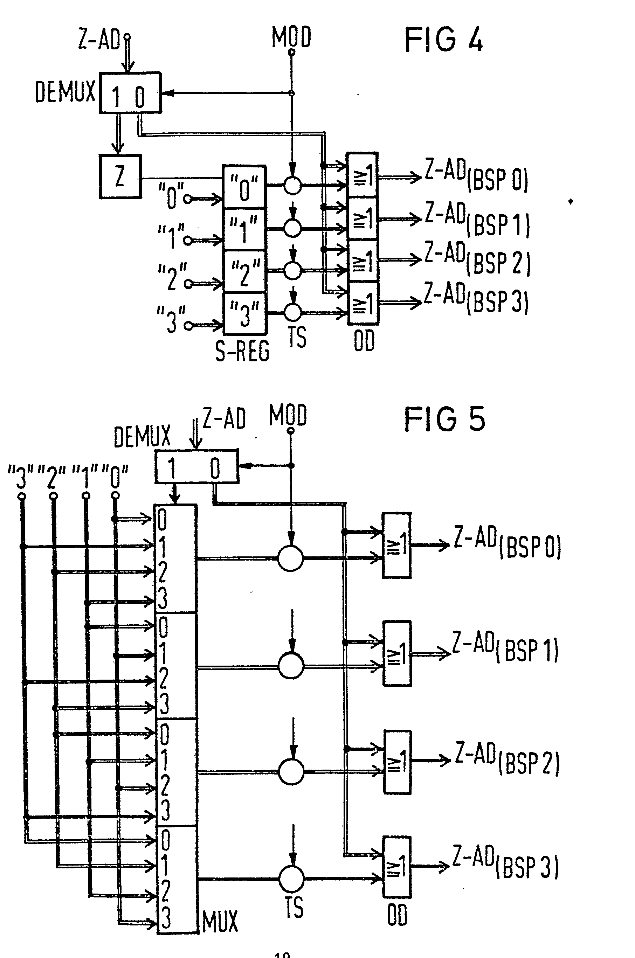

Figur 4 zeigt ein zweites Ausführungsbeispiel für den Adressenumordner AD-UM in Figur 2 mit einem vierstufigen Schieberegister S-REG, das in jeder Stufe im Rang steigend eine der üblichen 4 Basisadressen «0», «1», «2», und «3» gespeichert enthält. Abhängig von der Ausgangszeilenadresse Z-AD und dem Betriebsmodus MOD wird über den Auswahlschalter DEMUX die Zeilenadresse Z-AD entweder direkt allen 4 ODER-Gliedern OD zugeleitet, wenn dieselbe Zeile in allen Bytespalten anzusteuern ist, oder aber es wird entsprechend dem Wert der Zeilenadresse Z-AD über die Verschiebesteuerung Z der Inhalt des Schieberegisters S-REG jeweils von der Ausgangsstellung aus zyklisch in der einen oder anderen Richtung verschoben und die Ausgänge des Schieberegisters über die Torschaltung TS freigegeben.

Ein drittes Ausführungsbeispiel für den Adressenumordner AD-UM in Figur 2 zeigt schliesslich Figur 5. Gegenüber dem von Figur 4 ist das Schieberegister S-REG durch 4 Auswahlschalter MUX mit jeweils 4 Eingangsgruppen für die 4 verschiedenen Basisadressen «0», «1», «2» und «3» ersetzt. Unabhängig von der wirksamen Ausgangszeilenadresse Z-AD wird in jedem der Auswahlschalter MUX eine der 4 Basisadressen zum Ausgang durchgeschaltet, wobei die Zuordnung der Basisadressen dem jeweiligen Einordnungsschema entsprechend gewählt ist.

Bei allen drei erläuterten Ausführungsformen des Adressenumordners AD-UM handelt es sich um Prinzipschaltbilder, bei denen mit Ausnahme des Betriebsartsignales MOD alle Steuerwege im vorliegenden Fall jeweils zwei Adern zur Darstellung von zweistelligen Binärzahlen umfassen.

Bei Verwendung von Dateneinheiten in Form von Doppelwörtern mit 8 Byte und entsprechend 8 Zeilen im Feld würden die Steuerwege aus 3 Adern bestehen, die jeweils durchzuschalten sind.

Das dem Feld Fn des Basisspeichers B-SP in Figur 1 zugrundegelegte Einordnungsschema arbeitet im Vergleich zu dem des Feldes F0 nach dem umgekehrten Prinzip, d.h. die im Normalbetrieb jeweils eine Dateneinheit bildenden Bytes, z.B. An0, An1, An2 und An3, sind jeweils in der Diagonale angeordnet, während die miteinander korrespondierenden Bytes, z.B. An0, Bn0, Cn0 und Dn0, jeweils in einer Ebene liegen. Es können daher die anhand von Figur 3 bis Figur 5 erläuterten Adressenumordner Ad-UM in gleicher Weise für dieses Umordnungsschema verwendet werden, nur sind die Betriebsmodussignale MOD entsprechend zu vertauschen.

Aus der Sicht des Benutzers bedeutet die Wahl zwischen den beiden Einordnungsschemen für den Basisspeicher B-SP keinen Unterschied. Beide Einordnungsschemen bewirken aber bei konstantem Zeilenadressenteil und schrittweise fortgeschaltetem Feldadressenteil der Zugriffsadresse AD die Bildung von Strings zusammengehöriger Dateneinheiten, z.B. A0i bis Ani, mit serieller Folge der einzelnen Bytes entlang der vertikalen Zugriffsrichtung für den Basisspeicher, wobei entsprechend der Anzahl der Bytes in einer Datenebene im vorliegenden Fall vier parallele Datenstrings, nämlich A0i bis Ani, B0i bis Bni, C0i bis Cni und D0i bis Dni, gebildet werden können. Dies wird besonders deutlich beim Einordnungsschema für das Feld Fn in Figur 1, wenn man die erste Zeile dieses Feldes als Ausgangspunkt nimmt und dasselbe Einordnungsschema auch dem Feld F0 zugrundeliegt. Eine solche Stringbildung eröffnet verschiedene Möglichkeiten der Einordnung von aus vielen Dateneinheiten zusammengesetzten Dateien in den Basisspeicher, nämlich die Bildung einer Datei durch einen einzigen solchen String, so dass im vorliegenden Fall vier verschiedene Dateien gleichzeitig durch die assoziative Oberfläche ASS-FL überprüft werden können, oder aber die Verteilung einer Datei auf die parallelen Strings durch Serienschaltung der parallelen Strings in einem vorgegebenen Speicherbereich des Basisspeichers, so dass Teile der Datei parallel und damit die Datei als solche schneller überprüft werden kann.

Wie die Einordnungsschemen der Felder F0 und Fn in Figur 1 erkennen lassen, ist jeweils nur für die erste Zeile eines jeden Feldes die ordnungsgemässe Bytefolge, z.B. A00, A01, A02, A03 bzw. An0, Bn0, Cn0, Dn0, eingehalten. In den übrigen Zeilen eines jeden Feldes wird jedoch davon abgewichen. Um dennoch auch für diese Zeilen im Feld die ordnungsgemässe Bytereihenfolge sicherzustellen, werden die Dateneinheiten sowohl bei der Einspeicherung als auch bei der Ausspeicherung über Umordnungseinrichtungen D-UM-EG bzw. D-UM-AG geleitet und durch eine von der Zeilenadresse Z-AD abhängige zyklische Verschiebung der jeweiligen Byteserie die jeweils benötigte Reihenfolge hergestellt. Die Datenumordner können in ähnlicher Weise aufgebaut sein wie die Adressenumordner von Figur 4 oder besser Figur 5, jedoch mit dem Unterschied, dass an die Stelle der Basisadressen die einzuschreibenden bzw. gelesenen Bytes treten und die Steuerung durch die Betriebsart MOD entfällt. Weiterhin ist zu berücksichtigen, dass eine bei der Eingabe in der einen Richtung vorgenommene zyklische Verschiebung bei der Ausgabe durch eine in entgegengesetzter Richtung vorzunehmende Verschiebung kompensiert werden muss.

Beim Betrieb des Basisspeichers B-SP gemäss Figur 1 werden alle Dateneinheiten vom Eingabeleitungssystem D-EG zunächst über einen Datenumordner D-UM-EG geleitet, der abhängig von der anstehenden Zeilenadresse Z-AD die benötigte Bytefolge entsprechend dem gewählten Einordnungsschema herstellt. Die so bereitgestellte Bytefolge wird dann in das angesteuerte Feld F... im Basisspeicher B-SP unter Mitwirkung des Adressenumordners AD-UM in der Adressensteuerung AD-ST eingespeichert. Beim Auslesen aus dem Basisspeicher wird die Dateneinheit ebenfalls über einen Datenumordner D-UM-AG geleitet und die benötigte Bytefolge hergestellt. Erst dann erfolgt die Weiterleitung der gelesenen Dateneinheiten, und zwar bei normalem Speicherbetrieb an das Ausgabeleitungssystem D-AG und beim assoziativen Betrieb an die assoziative Oberfläche ASS-FL, wie es durch die Ausgabewegesteuerung WS-AG anhand des Steuersignales AG vorgegeben wird.

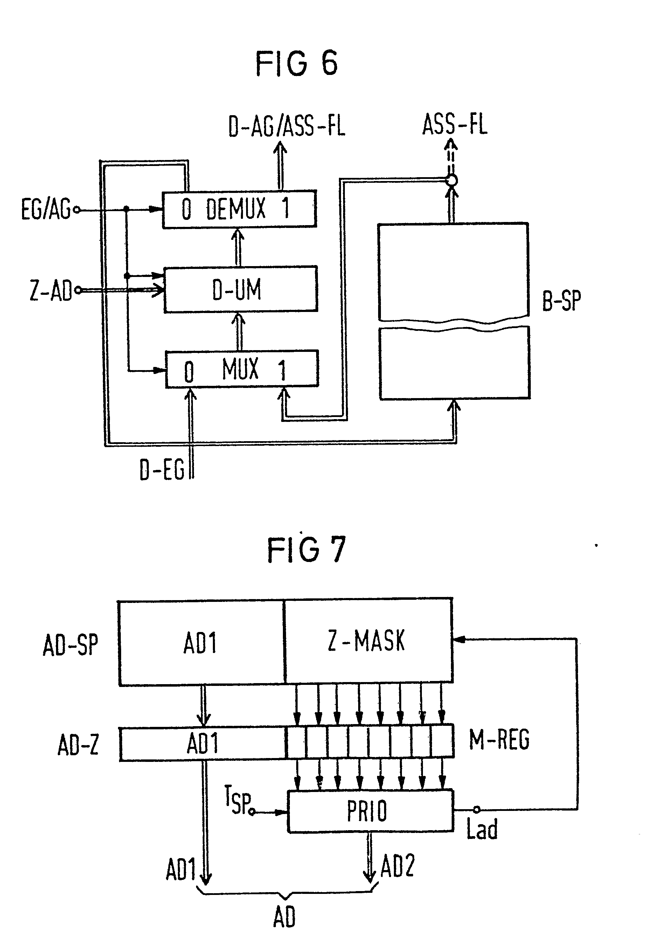

Anstelle von getrennten Datenumordnern für die Ein- und Ausgabe, wie in Figur 1 dargestellt, kann auch ein einziger Datenumordner D-UM vorgesehen sein, wie Figur 6 zeigt. Durch Wegeschalter DEMUX und MUX sind dann die Datenflusswege abhängig von Steuersignalen EG/AG für die Eingabe oder die Ausgabe so umzuschalten, dass diese immer über den Datenumordner D-UM führen. Ebenso muss die Verschieberichtung des Datenumordners anhand des Ein/Ausgabesteuersignals EG/AG vorgegeben werden, damit der Datenumordner richtig arbeiten kann.

Bei einem Basisspeicher B-SP der in Figur 1 gezeigten Art können unabhängig vom normalen oder assoziativen Speicherbetrieb die gleichen Datenumordner D-UM verwendet werden. Es können aber auch getrennte Datenumordner für den assoziativen Betrieb vorgesehen werden, was in Figur 6 mit dem gestrichelten Datenflusspfeil zur assoziativen Oberfläche ASS-FL am Ausgang des Basisspeichers B-SP angedeutet ist. Hierauf wird später noch eingegangen werden.

Für viele Anwendungsfälle kann die Verarbeitungsleistung des Hybrid-Assoziativspeichers merklich gesteigert werden, wenn mit der Adressensteuerung AD-ST eine Adressenmaskierung verbunden ist, so dass z.B. bei einem Suchlauf nicht der gesamte Basisspeicher in vertikaler Richtung überprüft wird, sondern nur ein ausgewählter Bereich und/oder dass in dem ausgewählten Bereich nicht jede Dateneinheitsebene, sondern in jedem Feld nur bestimmte Dateneinheitsebenen angesteuert werden. Dadurch kann der Datenfluss zur assoziativen Oberfläche ASS-FL in vielen Fällen gezielt auf die Daten beschränkt werden, die für den assoziativen Prüfvorgang benötigt werden, so dass eine Überprüfung vielfach wesentlich schneller ausgeführt werden kann.

Eine derartige Adressenmaskiersteuerung ist in Figur 7 gezeigt. Sie besteht im wesentlichen aus einem codiert arbeitenden Adressenzähler AD-Z zur Kennzeichnung eines Speicherbereiches im Basisspeicher B-SP anhand des Adressenteils AD1 und einem Maskenregister M-REG mit jeweils einer Bitstelle je Datenzeile in dem durch den Adressenteil AD1 festgelegten Speicherbereich. Die Ausgänge des Maskenregisters M-REG werden mit einer Prioritätsschaltung PRIO überwacht, die für jeden markierten Eingang nacheinander – getaktet durch den Speicherzyklustakt $T_{SP}$ – die zugehörige codierte Teiladresse AD2 liefert, die zusammen mit der Teiladresse AD1 die jeweilige Zugriffsadresse AD bildet. Entsprechend der Voreinstellung des Maskenregisters M-REG können also in dem ausgewählten Speicherbereich des Basisspeichers die einzelnen Datenzeilen in beliebiger Kombination aufeinanderfolgend angesteuert bzw. Datenzeilen in beliebiger Kombination von der Ansteuerung ausgenommen werden. Die Voreinstellung vom Adressenzähler AD-Z und dem Maskenregister M-REG erfolgt aus einem Adressenspeicher AD-SP, der bei Ansteuerung mit dem Signal lad nach Erkennung des letzten markierten Registerausganges durch die Prioritätsschaltung PRIO den jeweils nächsten Adresseneintrag in Form der Teiladresse AD1 und der Zeilenmaske Z-MASK zur Verfügung stellt.

Die Breite der Zeilenmaske Z-MASK wird zweckmässig so gewählt, dass für den überwiegenden Teil der Anwendungsfälle ein optimales Verhältnis zwischen Speicheraufwand einerseits und Steuerungs- bzw. Zeitaufwand andererseits gegeben ist. Gegebenenfalls kann auch mit veränderbaren Feldlängen für den Adressenteil AD1 und den Maskenteil Z-MASK gearbeitet werden.

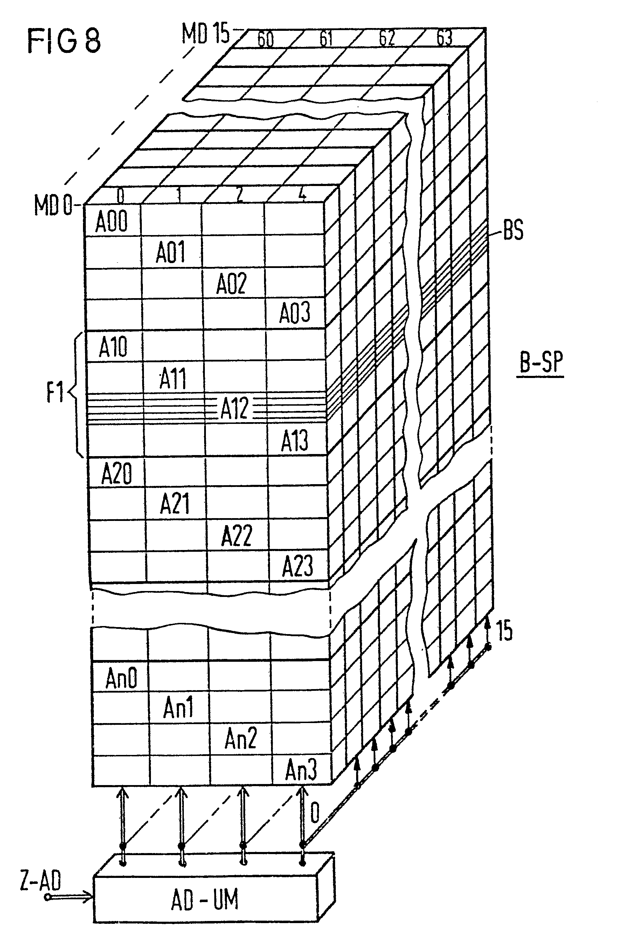

Figur 8 zeigt die Erweiterung des Basisspeichers B-SP von Figur 1 mit einer einzigen Speichergruppe auf beispielsweise 16 Speichergruppen MD0 bis MD15, die hintereinander in Form eines dreidimensionalen Speichers oder nebeneinander in Form eines zweidimensionalen Speichers angeordnet sein können und jeweils getrennt ansteuerbar sind. Die Feld- und Zeilenauswahl erfolgt dagegen in den einzelnen Speichergruppen parallel, so dass sich – wie gezeigt – der Aufwand für den Adressenumordner AD-UM nicht erhöht. Gleiches gilt für die nicht gezeigten Datenumordner, wenn für den assoziativen Betrieb gesonderte Umordner vorgesehen werden, da beim normalen Speicherbetrieb immer nur eine Dateneinheit eingeschrieben oder gelesen wird.

Für den assoziativen Betrieb wird dagegen für jede Speichergruppe ein gesonderter Datenumordner benötigt, wenn zur Steigerung der Leistungsfähigkeit des Hybrid-Assoziativspeichers jeweils eine vollständige Byteschicht oder Byteebene BS gleichzeitig zu einer entsprechend grossen assoziativen Oberfläche ASS-FL durchgeschaltet wird. Der Aufwand für die Datenordner lässt sich allerdings verringern, wenn man statt der Datenbytes erst die zugehörigen Trefferausgänge am Ausgang der assoziativen Oberfläche ASS-FL umordnet. Da jede Verknüpfungseinheit ALV ... der assoziativen Oberfläche ASS-FL nur einen Trefferausgang aufweist, verringert sich dann der Gesamtaufwand im Vergleich zu Bytes mit je 8 Bit auf ein Achtel.

Ein gemäss Figur 8 ausgebildeter Basisspeicher B-SP ist auch für ein Laden und Entladen im Streamingbetrieb besonders geeignet, wenn die Daten so aufbereitet werden, dass Dateneinheiten nacheinander in getrennte Speichergruppen eingetragen werden können. Diese Aufbereitung erfolgt durch einen vorgeschalteten Pufferspeicher.

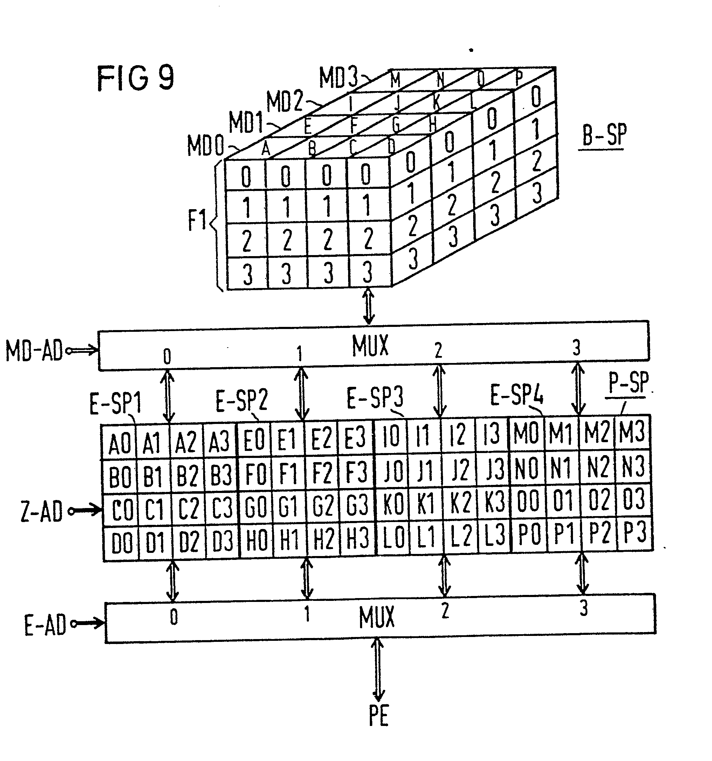

Figur 9 zeigt eine entsprechende Prinzipschaltung. Der Einfachheit halber sind dabei für den Basisspeicher B-SP nur vier Speichergruppen MD0 bis MD3 vorgesehen und nur ein Feld Fn dargestellt, so dass sich insgesamt 16 vertikale Strings A bis P zu je 4 Byte entsprechend 16 Dateneinheiten ergeben.

Im Pufferspeicher P-SP ist je Speichergruppe MD0 bis MD3 im Basisspeicher B-SP ein Einzelspeicher, insgesamt also die vier Einzelspeicher E-SP1 bis E-SP4 vorgesehen. Jeder Einzelspeicher E-SP ... weist eine Kapazität entsprechend der Anzahl von Strings oder Dateneinheiten je Speichergruppe MD ... auf. Diese Einzelspeicher werden von der Peripherie PE aus fortlaufend nacheinander über den Auswahlschalter MUX1 geladen, wobei die Zeilenadresse Z-AD der Einzelspeicher identisch ist mit der des Basisspeichers B-SP.

Sobald der Pufferspeicher P-SP voll ist, werden die jeweils durch dieselbe Zeilenadresse Z-AD gekennzeichneten Dateneinheiten nacheinander aus allen Einzelspeichern E-SP1 bis E-SP4 an die zugehörigen Speichergruppen MD0 bis MD3 des Basisspeichers B-SP weitergeleitet. Es sind dies also für die erste Zeile aller Einzelspeicher E-SP1 bis E-SP4 die Dateneinheiten A, E, I und M, die mit der gleichen Zeilenadresseinstellung im Basisspeicher B-SP eingespeichert werden. Entsprechend werden bei einer Ausgabe aus dem Basisspeicher B-SP zuerst die einzelnen Dateneinheiten, z.B. A, E, I, M nacheinander in die miteinander korrespondierenden Speicherabschnitte der Einzelspeicher E-SP1 bis E-SP4 eingeschrieben, und das fortschreitend von Zeile zu Zeile, bis der Pufferspeicher P-SP gefüllt ist. Bei der Weiterleitung der im Pufferspeicher P-SP gespeicherten Daten an die Peripherie PE werden dann die Einzelspeicher, z.B. E-SP1, vor der Weiterschaltung auf den jeweils folgenden Einzelspeicher, z.B. E-SP2, jeweils ganz geleert.

Anstelle von Einzelspeichern können Speicherbereiche eines einheitlichen Speichers verwendet werden. Ebenso können die einzelnen Speicherabschnitte, z.B. für die Dateneinheit A, durch eine der jeweiligen Stringlänge entsprechende Anzahl von untereinander liegenden Speicherabschnitten ersetzt werden, so dass aufeinanderfolgend zum Beispiel 16 Datenwörter A0i bis A15i als String mit 64 Byte und in gleicher Anordnung die Strings A bis P nacheinander gespeichert werden können.

Im Streamingverfahren können so ganze Feldschichten des Basisspeichers B-SP ausgetauscht werden. Voraussetzung ist dabei nur, dass der Pufferspeicher P-SP eine der Streaminggeschwindigkeit angepasste Arbeitsgeschwindigkeit aufweist, da der Basisspeicher B-SP langsamer als der Pufferspeicher P-SP arbeiten kann. Dabei kann es zweckmässig sein, dass anstelle des gezeigten einen Pufferspeichers P-SP zwei Pufferspeicher vorgesehen werden, die in an sich bekannter Weise im Wechselbetrieb arbeiten.

Insgesamt ermöglicht die Erfindung einen sehr leistungsfähigen und an verschiedene Betriebsfälle leicht anpassbaren Hybrid-Assoziativspeicher, wobei die universellen Verknüpfungselemente ALV ... der assoziativen Oberfläche ASS-FL und die Trefferauswerteeinrichtung T-AUSW in Anlehnung an die aus der eingangs bereits genannten DE-OS 32 16 905 bekannten Anordnung ausgebildet sein können.

## Patentansprüche

1. Hybrid-Assoziativspeicher, bestehend aus einem nichtassoziativen Basisspeicher (B-SP) mit Schreib- und Leseeinrichtungen zum wahlweisen Ein- und Ausspeichern von Dateneinheiten über ein der Länge der Dateneinheiten entsprechendes Ein/-Ausgabeleitungssystem (DEG/D-AG) und einer assoziativen Oberfläche (ASS-FL) zur Prüfung der aus dem Basisspeicher (B-SP) jeweils zugeführten Dateneinheiten, dadurch gekennzeichnet,
– dass jede Dateneinheit (z.B. A0) in eine vorgegebene Anzahl (z.B. 4) von jeweils aus mehreren Bit (z.B. 8 Bit) bestehenden Subeinheiten (z.B. Byte A00 bis A03) unterteilt ist,
– dass der Basisspeicher (B-SP) in durch jeweils eine Feldadresse (z.B. F-AD0) einer Adressensteuerung (AD-ST) ansteuerbare Felder (z.B. F0 bis Fn) unterteilt ist, die jeweils von einer der Anzahl der Subeinheiten je Dateneinheit entsprechenden Anzahl von Dateneinheits-Speicherabschnitten in verschiedenen Dateneinheitsebenen gebildet werden, wobei eine die jeweilige Feldadresse (F-AD) zu einer einheitlichen Zugriffsadresse (AD) ergänzende Zeilenadresse (Z-AD) den jeweiligen Dateneinheits-Speicherabschnitt innerhalb des jeweiligen Feldes bestimmt,
– dass abhängig von einem die Zeilenadresse (Z-AD) auswertenden Adressenumordner (AD-UM) in der Adressensteuerung (AD-ST) die den Subeinheiten der jeweils ein Feld (z.B. F0) bildenden Dateneinheiten (z.B. A0, B0, C0 und D0) entsprechenden Subeinheits-Speicherabschnitte innerhalb des Feldes (F0) getrennt und gemäss einem vorgegebenen Einordnungsschema so verteilt ansteuerbar sind, dass die einander korrespondierenden Subeinheiten (z.B. A00, B00, C00 und D00 aller Dateneinheiten (A0 bis D0) des Feldes (F0) jeweils in verschiedene

Subeinheits-Speicherabschnitte der einzelnen Dateneinheitsebenen speicherbar sind und abhängig vom gewählten Betriebsmodus (MOD) wahlweise die gezielte gleichzeitige Auswahl der eine Dateneinheit bildenden Subeinheiten (z.B. A00, A01, A02 und A03) bei normalem Speicherbetrieb oder die gezielte gleichzeitige Auswahl der einander korrespondierenden Subeinheiten (z.B. A00, B00, C00 und D00) aller Dateneinheiten eines Feldes (F0) beim assoziativen Speicherbetrieb möglich ist,
– dass in der Adressensteuerung (AD-ST) nicht nur die Zugriffadresse (AD) sondern auch die Feldadresse (F-AD) bei konstanter Zeilenadresse (ZAD) schrittweise änderbar ist, so dass aufgrund des gewählten Einordnungsschemas unmittelbar zusammenhängende aufeinanderfolgende Dateneinheiten (z.B. A0 bis An) jeweils den durch die konstante Zeilenadresse (Z-AD) bestimmten Dateneinheitsebenen aufeinanderfolgender Felder (F0 bis Fn) zuweisbar sind,
– dass abhängig von die Zeilenadresse (Z-AD) ebenfalls auswertenden Umordnungseinrichtungen (D-UM-EG, D-UM-AG) die Subeinheiten der jeweils einzuspeichernden bzw. auszuspeichernden Gruppe von Subeinheiten entsprechend einer Dateneinheit gemäss dem gewählten Einordnungsschema für die Felder (z.B. F0 bis Fn) vor dem Einspeichern bzw. vor dem Weiterleiten umgruppierbar sind, um beim Einspeichern die notwendige Speicherreihenfolge bzw. um nach dem Ausspeichern die ursprüngliche Rangfolge zu gewährleisten, und
– dass die assoziative Oberfläche (ASS-FL) je Subeinheit eine die Bits der zugeführten Subeinheit jeweils parallelverarbeitende universelle Verknüpfungseinheit (z.B. ALV1 bis ALV4) aufweist, deren Ergebnisausgänge mit der zugehörigen Trefferauswertesteuerung (T-AUSW) gekoppelt sind.

2. Hybrid-Assoziativspeicher nach Anspruch 1, dadurch gekennzeichnet, dass die Einordnung der Dateneinheiten (z.B. A0i–D0i) in das von diesen gebildete Feld (z.B. F0) in der Weise erfolgt, dass die jeweils eine Dateneinheit bildenden Subeinheiten (z.B. A00, A01, A02, A03) alle in einer Dateneinheitsebene liegen und die korrespondierenden Subeinheiten (z.B. A00, B00, C00, D00) jeder Dateneinheit von Dateneinheitsebene zu Dateneinheitsebene um einen Subeinheitenabschnitt zyklisch versetzt angeordnet sind.

3. Hybrid-Assoziativspeicher nach Anspruch 1, dadurch gekennzeichnet, dass die Einordnung der Dateneinheiten (z.B. Ani–Dni) in das von diesen gebildete Feld (z.B. Fn) in der Weise erfolgt, dass jeweils die miteinander korrespondierenden Subeinheiten (z.B. An0, Bn0, Cn0 und Dn0) aller Dateneinheiten des Feldes in einer Dateneinheitsebene liegen und die einzelnen Subeinheiten (z.B. An0, An1, An2 und An3) jeder Dateneinheit von Dateneinheitsebene zu Dateneinheitsebene um einen Subeinheitenabschnitt zyklisch versetzt angeordnet sind.

4. Hybrid-Assoziativspeicher nach einem der Ansprüche 1–3, dadurch gekennzeichnet, dass zur Auswahl der einzelnen Subeinheitsabschnitte im jeweils ausgewählten Feld (z.B. F0) ein von der Adresse (Z-AD) zur Kennzeichnung der massgebenden Dateneinheitsebene steuerbarer gemeinsamer Adressenumordner (AD-UM) zur Steuerung der vertikalen Versetzung im Feld vorgesehen ist, der als Adressengenerator für jede Subeinheitenabschnittspalte, (z.B. BSF0 bis BSF3) eine besondere Ansteueradresse (z.B. Z-AD$_{(BSP0)}$) zur Auswahl jeweils eines Subeinheitenabschnittes jeder Dateneinheitsebene liefert, so dass zur gleichzeitigen Auswahl der jeweils eine gewünschte Dateneinheit bildenden Subeinheitenabschnitte wie bei einem herkömmlichen Speicher lediglich die Zeilenadresse (Z-AD) zur Kennzeichnung der massgebenden Datenebene innerhalb des zuständigen Feldes (z.B. F0) erforderlich ist.

6. Hybrid-Assoziativspeicher nach Anspruch 4, dadurch gekennzeichnet, dass der Adressenumordner (AD-UM) abhängig vom Betriebsmodus (MOD) umschaltbar ist und abhängig vom gewählten Betriebsmodus (MOD) und dem gewählten Einordnungsschema für die Dateneinheiten entweder einheitliche Ansteueradressen (z.B. Z-AD$_{(BSP0)}$) zur Auswahl von Subeinheiten derselben Datenebene oder aber unterschiedliche Ansteueradressen (Z-AD$_{(BSP)}$ bis Z-AD$_{(BSP3)}$) zur Auswahl von vertikal versetzten Subeinheiten liefert.

6. Hybrid-Assoziativspeicher nach einem der Ansprüche 1 bis 5, dadurch gekennzeichnet, dass für die Umordnung der Subeinheiten (z.B. C02, C03, C00 und C01) innerhalb der jeweils zu schreibenden bzw. zu lesenden Dateneinheiten (z.B. C0i) eine einzige Umordnungseinrichtung (D-UM) vorgesehen ist, die abhängig von der Richtung (EG/AG) des Datenflusses über Umschalter (MUX, DEMUX) in den jeweiligen Datenflussweg eingefügt wird.

7. Hybrid-Assoziativspeicher nach einem der Ansprüche 1 bis 5 oder nach Anspruch 6, dadurch gekennzeichnet, dass für den normalen und für den assoziativen Speicherbetrieb getrennte Umordnungseinrichtungen vorgesehen sind.

8. Hybrid-Assoziativspeicher nach Anspruch 7, dadurch gekennzeichnet, dass die bei assoziativen Speicherbetrieb aus dem Basisspeicher (B-SP) ausgelesenen Dateneinheiten unmittelbar der assoziativen Oberfläche (ASS-FL) zugeführt werden und dass erst die von den einzelnen Verknüpfungseinheiten (z.B. ALV1 bis ALV4) ermittelten Ergebnisse umgeordnet werden.

9. Hybrid-Assoziativspeicher nach einem der Ansprüche 1 bis 5 oder nach Anspruch 6, dadurch gekennzeichnet, dass für den normalen und für den assoziativen Speicherbetrieb gemeinsame Umordnungseinrichtungen (z.B. D-UM) vorgesehen sind.

10. Hybrid-Assoziativspeicher nach einem der Ansprüche 6 bis 9, dadurch gekennzeichnet, dass die Umordnungseinrichtung (D-UM) aus einer der Anzahl (z.B. 4) von Subeinheiten je Dateneinheit entsprechenden Anzahl von Verteilerschaltern mit einer der Anzahl von Subeinheiten entsprechenden Anzahl von Ausgangsgruppen zur Weiterleitung der am Eingang anstehenden Subeinheiten bzw. Verknüpfungsergebnisse an die jeweils durch die Zeilenadresse für die massgebende Dateneinheitsebene gekennzeichnete Ausgangsgruppe besteht, wobei die miteinander korrespondierenden Ausgangsgruppen über ODER-Glieder zusammengefasst sind.

11. Hybrid-Assoziativspeicher nach einem der Ansprüche 1 bis 10, dadurch gekennzeichnet, dass die Einrichtungen (AD-ST) zur Auswahl der einzelnen Dateneinheiten im Basisspeicher (B-SP) mit einer Maskiersteuerung (AD-MASK) zusammenarbeiten, die die nacheinander anzusteuernden Dateneinheiten bei assoziativen Suchvorgängen in der jeweils gewünschten Kombination festlegt.

12. Hybrid-Assoziativspeicher nach Anspruch 11, dadurch gekennzeichnet, dass die Maskiersteuerung (AD-MASK) aus einem voreinstellbaren Adressenzähler (AD-Z) zur Kennzeichnung des Beginns eines ausgewählten Speicherbereiches im Basisspeicher (B-SP) und einem den ausgewählten Basisspeicherbereich überwachenden voreinstellbaren Maskenregister (M-REG) mit je einer Bitstelle je Speicherzeile besteht, dass die Ausgänge des Maskenregisters (M-REG) mit einer Prioritätsschaltung (PRIO) überwacht werden, die mit jedem Speicherzyklustakt (T$_{SP}$) in fortlaufender Folge die dem jeweils ausgewerteten Eingang zugehörige Teiladresse (AD2) in codierter Form liefert, die zusammen mit der vom Adressenzähler (AD-Z) bereitgestellten Teiladresse (AD1) die jeweilige Ansteueradresse (AD) bildet, und dass jeweils nach Überprüfung aller Ausgänge des Maskenregisters (MREG) durch die Prioritätsschaltung (PRIO) der Adressenzähler (AD-Z) und das Maskenregister (M-REG) aus einem Adressenspeicher (AD-SP) erneut geladen werden.

13. Hybrid-Assoziativspeicher nach einem der Ansprüche 1 bis 12, dadurch gekennzeichnet, dass der Basis-Speicher (BSP) aus mehreren, jeweils eine vertikale Säule von Dateneinheiten aufnehmenden Speichergruppen (z.B. MD0 bis MD15) zusammengesetzt ist, wobei die einander entsprechenden Speicherabschnitte für die einzelnen Subeinheiten (z.B. A00, A01, A02, A03) der Dateneinheiten (z.B. A0i) in allen Speichergruppen (MD0 bis MD15) in gleicher Weise auswählbar sind und durch die selbe Feld- und Zeilenadresse (F-AD/ZAD) gekennzeichnete Dateneinheiten in den verschiedenen Speichergruppen (MD0 bis MD15) durch einen übergeordneten Speichergruppenadressteil (MD-AD) auswählbar sind, und dass bei assoziativen Betrieb durch gleichzeitige Ansteuerung aller Speichergruppen (MD0 bis MD15) eine entsprechende Anzahl von Dateneinheiten gleichzeitig zur assoziativen Oberfläche durchschaltbar ist.

14. Hybrid-Assoziativspeicher nach Anspruch 13, dadurch gekennzeichnet, dass lediglich für den assoziativen Betrieb je Speichergruppe (z.B.

DM0 bis MD15) eine gesonderte Umordnungseinrichtung für die Daten vorgesehen ist und alle diese Umordnungseinrichtungen parallel zueinander arbeiten.

15. Hybrid-Assoziativspeicher nach Anspruch 14, dadurch gekennzeichnet, dass die Umord-nungseinrichtungen am Ausgang der assoziati-ven Oberfläche (ASS-FL) angeordnet sind und dass statt der Subeinheiten aus dem Basisspeicher (B-SP) jeweils die Trefferanzeigen je Ver-knüpfungseinheit (ALV . . .) umgeordnet und da-mit die einzuhaltende Reihenfolge je Dateneinheit wieder hergestellt wird.

16. Hybrid-Assoziativspeicher nach Anspruch 13, 14 oder 15 dadurch gekennzeichnet, dass zum Laden und Entladen des Basisspeichers (B-SP) im Streaming-Verfahren ein Pufferspeicher (P-SP) mit einer der Anzahl von Speicher-gruppen (z.B. MD0 bis MD3) im Basisspeicher (B-SP) entsprechenden Anzahl von Einzelspeichern (z.B. E-SP1 bis E-SP4) mit fester Zuord-nung zu den Speichergruppen (MD0 bis MD3) im Basis-Speicher (B-SP) vorgesehen ist, von denen jeder eine der Anzahl der ein Feld (z.B. $F_n$) bildenden Dateneinheiten entsprechende Anzahl (z.B. 4) von Dateneinheiten (z.B. A, B, C, D) von der Peripherie (PE) aufnimmt oder an diese abgibt und die Einzelspeicher (ES-P1 bis E-SP4) nacheinander geladen oder entladen werden, dass im Verkehr mit dem Basisspeicher (B-SP) jeweils bei gleicher Feld- und Zeilenadresseinstellung für den Basisspeicher die in den Einzelspeichern (E-SP1 bis E-SP4) des Pufferspeichers (P-SP) einander entsprechenden Dateneinheiten (z.B. A, E, I, M) jeweils nacheinander der zugehö-rigen Speichergruppe (MD . . .) des Basisspei-chers (B-SP) zugeführt werden bzw. jeweils nacheinander aus den einzelnen Speichergrup-pen (MD0 bis MD3) ausgelesen und nacheinander in die zugehörigen Einzelspeicher (E-SP1 bis E-SP4) des Pufferspeichers (P-SP) eingeschrieben werden, so dass bei einem Datentransfer zwischen Basisspeicher (B-SP) und Pufferspeicher (P-SP) jeweils die Dateneinheiten für eine voll-ständige Feldebene ($F_n$) des Basisspeichers (B-SP) ausgetauscht werden.

17. Hybrid-Assoziativspeicher nach Anspruch 16, dadurch gekennzeichnet, dass zwei Pufferspeicher vorgesehen sind, die im Wechselbetrieb arbeiten.

**Revendications**

1. Mémoire associative hybride, constituée par une mémoire de base non associative (B-SP) comportant des dispositifs d'enregistrement et de lecture permettant, au choix, d'enregistrer et de lire des unités de données par l'intermédiaire d'un système de lignes d'entrée/sortie (DEG/D-AG) correspondant à la longueur des unités de données, et une surface associative (ASS-FL) permettant de contrôler les unités de données envoyées respectivement à la mémoire de base (B-SP), caractérisé par le fait

– que chaque unité de données (par exemple A0) est subdivisée en un nombre prédéterminé (par exemple 4) de sous-unités (par exemple octets A00 à A03) constituées chacune de plusieurs bits (par exemple 8 bits),

– que la mémoire de base (B-SP) est subdivisée en des zones (par exemple F0 à Fn), qui peuvent être sélectionnées respectivement au moyen d'une adresse de zone (par exemple F-AD0) d'un dispositif de commande d'adresses (AD-ST) et qui sont formées respectivement par un nombre, correspondant au nombre des sous-unités dans chaque unité de données, de sections de mémorisation d'unités de données dans différents plans d'unités de données, auquel cas une adresse de ligne (B-AD), qui complète l'adresse de zone respective (F-AD) pour former une adresse d'accès unitaire (AD), détermine la section respective de mémorisation d'unités de données à l'intérieur de la zone respective,

– que les sections de mémorisation des sous-unités, qui correspondent aux sous-unités des unités de données (par exemple A0, B0, C0 et D0) constituant respectivement une zone (par exemple F0), sont séparées à l'intérieur de la zone (F0) en fonction d'un dispositif (AD-UM) de réarrangement d'adresses, évaluant l'adresse des lignes (Z-AD) et peuvent être sélectionnées de façon distribuée conformément à un schéma de rangement prédéterminé de telle sorte les sous-unités (par exemple A00, B00, C00 et D00), qui se correspondent réciproquement, de toutes les unités de données (A0 à D0) de la zone F0) peu-vent être mémorisées respectivement dans différentes sections de mémorisation de sous-unités des différents plans d'unités de données et qu'au choix la sélection simultanée recherchée des sous-unités (par exemple A00, A01, A02 et A03), constituant une unité de données, lors du fonctionnement normal de la mémoire ou la sélection simultanée recherchée des sous-unités (par exemple A00, B00, C00 et D00), qui se corres-pondent réciproquement, de toutes les unités de données dans une zone (F0) est possible dans le cas du fonctionnement associatif de la mémoire, en fonction du mode de fonctionnement sélectionné (MOD),

– que dans le dispositif (AD-ST) de commande d'adresses, non seulement l'adresse d'accès (AD), mais également l'adresse des zones (AD) peut être modifiée pas-à-pas dans le cas d'une adresse de ligne (ZAD) constante, de sorte que, sur la base du schéma choisi de rangement, les unités de données successives directement atte-nantes (par exemple A0–An) peuvent être affec-tées respectivement aux plans d'unités de données, déterminés par l'adresse de ligne (Z-AD) constante, de zones successives (F0 à Fn),

– qu'en fonction de dispositifs de réarrangement (D-UM-EG, D-UM-AG), qui évaluent également l'adresse de ligne (Z-AD), les sous-unités du groupe, réalisant respectivement une mémorisation et une lecture, de sous-unités peuvent être regroupées, de manière à correspondre à une unité de données, conformément au schéma de rangement choisi pour les zones (par exemple F0 à Fn) avant la mémorisation ou avant la retransmission, de manière que la séquence nécessaire de mémorisation soit garantie lors de la mémorisation et que la séquence initiale de rangement soit garantie lors de la lecture, et

– que la surface associative (ASS-FL) possède, pour chaque sous-unité, une unité logique universelle (par exemple ALV1 à ALV4) traitant respectivement en parallèle les bits de la sous-unité envoyée et dont les sorties sont accouplées au dispositif associé (T-AUSW) d'évaluation des coups au but.

2. Mémoire associative hybride suivant la revendication 1, caractérisée par le fait que le rangement des unités de données (par exemple A0i–D0i) s'effectue dans la zone (par exemple F0) formée par ces unités de sorte que les sous-unités (par exemple A00, A01, A02 et A03) constituent des unités respectives de données qui sont toutes situées dans un plan d'unités de données et que les sous-unités correspondantes (par exemple A00, B00, C00, D00) de chaque unité de données sont disposées en étant décalées cycliquement d'une section de sous-unités, d'un plan d'unités de données.

3. Mémoire associative hybride suivant la revendication 1, caractérisée par le fait que l'arrangement des unités de données (par exemple Ani–Dni) dans la zone (par exemple Fn) formée par ces unités s'effectue de telle sorte que les sous-unités (par exemple An0, Bn0, Cn0 et Dn0), qui se correspondent réciproquement, de toutes les unités de données de la zone, sont situées dans un plan d'unité de données et que les différentes sous-unités (par exemple An0, An1, An2 et An3) de chaque unité de données sont disposées en étant décalées cycliquement d'une section de sous-unités, dans le plan des unités de données à l'autre.

4. Mémoire associative hybride suivant l'une des revendications 1–3, caractérisée par le fait que pour la sélection des différentes sections d'unités dans la zone (par exemple F0) respectivement choisie, il est prévu un dispositif commun (AD-UM) de réarrangement d'adresses, qui peut être commandé par l'adresse (Z-AD) servant à la caractérisation du plan déterminant d'unités de données et servant à commander le décalage vertical dans la zone et qui fournit, en tant que générateur d'adresses pour chaque colonne de sections de sous-unités (par exemple BSF0 à BSF3), une adresse de sélection particulière (par exemple Z-AD$_{(BSP0)}$) pour la sélection d'une section respective de sous-unités de chaque plan d'adresses, de sorte que pour la sélection simultanée des sections respectives de sous-unités constituant une unité de données désirée, seule l'adresse (Z-AD) servant à caractériser le plan de données déterminé à l'intérieur de la zone concernée (par exemple F0) est nécessaire, comme dans une mémoire usuelle.

5. Mémoire associative hybride suivant la revendication 4, caractérisée par le fait que le dispositif (AD-UM) de réarrangement d'adresses peut être commuté en fonction du mode de fonctionnement (MOD) et délivre, en fonction du mode de fonctionnement sélectionné (MOD) et du chemin choisi de rangement pour les unités de données, soit des adresses uniformes de sélection (par exemple Z-AD$_{(BSP0)}$) pour la sélection de sous-unités du même plan de données, soit des adresses différentes de sélection (Z-AD$_{(BSP)}$ à Z-AD$_{(BSP3)}$) pour la sélection de sous-unités décalées verticalement.

6. Mémoire associative hybride suivant l'une des revendications 1 à 5, caractérisée par le fait que pour le réarrangement des sous-unités (par exemple C02, C03, C00 et C01) à l'intérieur des unités de données (par exemple C0i) devant être respectivement enregistrées ou lues), il est prévu un seul dispositif de réarrangement (D-UM), qui est inséré dans la voie respective de transmission du flux de données en fonction de la direction (EG/AG) du flux de données, par l'intermédiaire de commutateurs (MUX, DEMUX).

7. Mémoire associative hybride suivant l'une des revendications 1 à 5 ou suivant la revendication 6, caractérisée par le fait que des dispositifs séparés de réarrangement sont prévus pour le fonctionnement normal de la mémoire et pour le fonctionnement associatif de cette dernière.

8. Mémoire associative hybride suivant la revendication 7, caractérisée par le fait que les unités de données, qui sont lues hors de la mémoire de base (B-SP) lors du fonctionnement associatif de la mémoire, sont envoyées directement à la surface associative (ASS-FL) et qu'alors les résultats, déterminés par les différentes unités logiques (par exemple ALV1 à ALV4), sont réarrangés.

9. Mémoire associative hybride suivant l'une des revendications 1 à 5 ou suivant la revendication 6, caractérisée par le fait qu'il est prévu des dispositifs de réarrangement (par exemple D-UM) communs pour le fonctionnement normal de la mémoire et pour le fonctionnement associatif de la mémoire.

10. Mémoire associative hybride suivant l'une des revendications 6 à 9, caractérisée par le fait que le dispositif de réarrangement (D-UM) est constitué par un nombre, correspondant au nombre (par exemple 4) de sous-unités pour chaque unité de données, de commutateurs de distribution comprenant un nombre, correspondant au nombre de sous-unités, de groupes de sortie pour la retransmission des sous-unités ou des résultats de combinaisons logiques, présents à l'entrée, au groupe de sortie caractérisé respectivement par l'adresse de lignes pour le plan déterminant d'unités de données, auquel cas les groupes de sortie, qui se correspondent réciproquement, sont réunis par l'intermédiaire de circuits OU.

11. Mémoire associative hybride suivant l'une des revendications 1 à 10, caractérisée par le fait que les dispositifs (AD-ST) coopèrent, pour la sélection des différentes unités de données dans la mémoire de base (B-SP), avec un dispositif de commande de masquage (AD-MASK), qui détermine les unités de données devant être commandées successivement, lors de processus associatifs de recherche, et ce dans la combinaison respectivement désirée.

12. Mémoire associative hybride suivant la revendication 11, caractérisée par le fait que le dispositif de commande de masquage (AD-MASK) est constitué par un compteur d'adresses (AD-Z) préréglable pour la caractérisation du début d'une zone de mémoire sélectionnée dans la mémoire de base (B-SP) et par un registre préréglable de masques (M-REG), contrôlant la zone sélectionnée de la mémoire de base, respectivement en position binaire pour chacune des mémoires, que les sorties du registre de masques (M-REG) sont contrôlées au moyen d'un circuit de priorité (PRIO), qui fournit sous forme codée, selon une suite continue et pour chaque impulsion de cadence ($T_{SP}$) du cycle de la mémoire, l'adresse partielle (AD2) associée aux entrées respectivement évaluées et qui forme, en association avec l'adresse partielle (AD1) préparée par le compteur d'adresses (AD-Z), l'adresse de sélection respective (AD) et que, respectivement après le contrôle de toutes les sorties du registre de masques (MREG) par le circuit de priorité (PRIO), le compteur d'adresses (AD-Z) et le registre de masques (MREG) sont à nouveau chargés à partir d'une mémoire d'adresses (AD-SP).

13. Mémoire associative hybride suivant l'une des revendications 1 à 12, caractérisée par le fait que la mémoire d'adresses (BSP) est constituée par la réunion de plusieurs groupes de mémoire (par exemple MD0 à MD15), recevant respectivement une colonne verticale des unités de données, auquel cas les différentes sections de mémorisation pour les différentes sous-unités (par exemple A00, A01, A02, A03) des unités de données (par exemple A0i), dans tous les groupes de mémoire (MD0 à MD15), peut être sélectionnée de la même manière et les unités de données caractérisées par la même adresse de zone et la même adresse de ligne (F-AD/ZAD), dans les différents groupes.de mémoire (MD0 à MD15) peuvent être sélectionnées au moyen d'une partie d'adresse de rang supérieur (MD-2) des groupes de mémoires, et que dans le cas du fonctionnement associatif, un nombre correspondant d'unités de données peuvent être transmises simultanément à la surface associative grâce à la commande simultanée de tous les groupes de mémoire (MD0 à MD15).

14. Mémoire associative hybride suivant la revendication 13, caractérisée par le fait qu'un dispositif particulier de réarrangement pour les données est prévu uniquement en fonctionnement associatif dans chaque groupe de mémoires (par exemple MD0 à MD15) et que tous ces dispositifs de réarrangement travaillent en parallèle entre eux.

15. Mémoire associative hybride selon la revendication 14, caractérisée par le fait que les dispositifs de réarrangement sont disposés à la sortie de la surface associative (ASS-FL) et qu'à la place des sous-unités tirées de la mémoire de base (B-SP), respectivement les indications de coups au but sont réarrangées pour chaque unité logique (ALV...) et que de ce fait la séquence devant être respectée pour chaque unité de données est à nouveau établie.

16. Mémoire associative hybride suivant la revendication 13,14 ou 15, caractérisée par le fait que pour le chargement et le déchargement de la mémoire de base (B-SP) dans le cadre du procédé d'enregistrement et de lecture en continu, il est prévu une mémoire tampon (B-SP) comportant un nombre, correspondant au nombre de groupes de mémoire (par exemple MD0 à MD3) de la mémoire de base (P-SP), de mémoires individuelles (par exemple E-SP1 à E-SP4) associées, selon une association fixe, aux groupes de mémoire (MD0 à MD3) situés dans la mémoire de base (B-SP) et dont chacune reçoit un nombre, correspondant au nombre (par exemple 4), des unités de données constituant une zone (par exemple $F_n$) d'unités de données (par exemple A, B, C, D) à partir de la périphérie (PE) et délivre à cette dernière ce nombre d'unités de données et que les mémoires individuelles (ES-P1 à E-SP4) sont chargées ou déchargées successivement, que dans le trafic réalisé avec la mémoire de base (B-SP), respectivement pour un réglage simultané de l'adresse de zone et de l'adresse de ligne dans la mémoire de base, les unités de données (par exemple A, E, I, N), qui se correspondent réciproquement dans les mémoires individuelles (E-SP1 à E-SP4) de la mémoire (P-SP), sont envoyées respectivement au groupe de mémoire associé (MD ...) de la mémoire de base (B-SP) ou sont lues respectivement successivement hors des groupes de mémoires individuelles (MD0 à MD3) et sont ensuite enregistrées dans les mémoires individuelles associées (E-SP1 à E-SP4) de la mémoire tampon (P-SP) de sorte que, dans le cas d'un transfert des données entre la mémoire de base (B-SP) et la mémoire tampon (P-SP), les unités de données respectives concernant un plan de zones complet ($F_n$) de la mémoire de base (B-SP) sont échangées.

17. Mémoire hybride associative suivant la revendication 16, caractérisée par le fait qu'il est prévu deux mémoires tampons qui travaillent en alternance.

**Claims**

1. A hybrid associative store, comprising a non-associative base store (B-SP) with write- and read devices for the selected input and output of data units via an input/output transmission system (DEG/D-AG) which corresponds to the length of the data units and comprising an associative area (ASS-FL) for testing the data units supplied from the base store (B-SP), characterised in that

– each data unit (e.g. A0) is sub-divided into a given number (e.g. 4) of sub-units (e.g. bytes A00 to A03), each of which comprises a plurality of bits (e.g. 8 bits),

– that the base store (B-SP) is sub-divided into arrays (e.g. F0 to Fn), each of which can be activated by an array address (e.g. F-AD0) of an ad-

dress control unit (AD-ST) and each of which is formed by a number of data unit store sections – corresponding to the number of sub-units per data unit – in various data unit levels, where a row address (Z-AD), which supplements the respective array address (F-AD) to form a standard access address (AD), specifies the respective data unit store section within the respective array,

– that in dependence upon an address reclassifier (AD-UM), which analyses the row address (Z-AD), in the address control unit (AD-ST), the sub-unit store sections within the array (F0), which correspond to the sub-units of the data units (e.g. A0, B0, C0 and D0) which each form an array (e.g. F0), are separated and can be activated, distributed in accordance with a given classification plan, in such manner that the mutually-corresponding sub-units (e.g. A00, B00, C00 and D00) of all the data units (A0 to D0) of the array (F0) can each be stored in different sub-unit store sections of the individual data unit levels and, in dependence upon the selected operating mode (MOD), either the purposive, simultaneous selection of the sub-units (e.g. A00, A01, A02 and A03) which form a data unit is possible in the case of normal store operation or the purposive, simultaneous selection of the mutually corresponding sub-units (e.g. A00, B00, C00 and D00) of all the data units of an array (F0) is possible in the case of associative store operation,

– that in the address control unit (AD-ST), not only the access address (AD) but also the array address (F-AD), when the row address (ZAD) is constant, can be changed in stepped fashion so that consecutive data units (e.g. A0 to An) which are directly linked on the basis of the selected classification plan can each be allocated to the data unit levels, specified by the constant row address (Z-AD), f consecutive arrays (F0 to Fn),

– that in dependence upon reclassification devices (D-UM-EG, D-UM-AG) which likewise analyse the row address (Z-AD), the sub-units of the group of sub-units which is to be input or output, corresponding to a data unit, can be regrouped in accordance with the selected classification plan for the arrays (e.g. F0 to Fn) prior to input or prior to output in order to ensure the necessary storage sequence during input and in order to ensure the original sequence following output and

– that in respect of each sub-unit, the associative area (ASS-FL) is assigned a universal logic-linking unit (e.g. ALV1 to ALV4) which carries out parallel processing of the bits of the supplied sub-unit and whose result outputs are coupled to the associated hit analysis control unit (T-AUSW.).

2. A hybrid associative store as claimed in claim 1, characterised in that the classification of the data units (e.g. A0i–D0i) in the array (e.g. F0) which they form is carried out in that the sub-units (e.g. A00, A01, A02, A03), which in each case form a data unit, are all arranged in one data unit level and the corresponding sub-units (e.g.

A00, B00, C00, D00) of each data unit are arranged so as to be cyclically offset by one sub-unit section from data unit level to data unit level.

3. A hybrid associative store as claimed in claim 1, characterised in that the classification of the data units (e.g. Ani–Dni) in the array (e.g. Fn) which they form is carried out in that the mutually-corresponding sub-units (e.g. An0, Bn0, Cn0, Dn0) of all the data units of the array are arranged in one data unit level and the corresponding sub-units (e.g. An0, An1, An2, An3) of each data unit are arranged so as to be cyclically offset by one sub-unit section from data unit level to data unit level.

4. A hybrid associative store as claimed in one of the claims 1–3, characterised in that for the selection of the individual sub-unit sections in the selected array (e.g. F0), a common address reclassifier (AD-UM) is provided, which can be controlled by the address (Z-AD) which identifies the governing data unit level, which itself controls the vertical offset in the array, and which as address generator for each sub-unit section column (e.g. BSF0 to BSF3) supplies a special drive address (e.g. $Z\text{-}AD_{(BSP0)}$) in order to select a sub-unit section in each data unit level, so that for the simultaneous selection of the sub-unit sections which in each case form a desired data unit, as in a conventional store, only the row address (Z-AD) which identifies the governing data level within the relevant array (e.g. F0) is required.

5. A hybrid associative store as claimed in claim 4, characterised in that the addresse reclassifier (AD-UM) can be switched over in dependence upon the operating mode (MOD), and in dependence upon the selected operating mode (MOD) and the selected classification plan for the data units either supplies uniform drive addresses (e.g. $Z\text{-}AD_{(BSP0)}$) for the selection of sub-units of the same data level or supplies different drive addresses ($Z\text{-}AD_{(BSP)}$ to $Z\text{-}AD_{(BSP3)}$) for the selection of vertically offset sub-units.

6. A hybrid associative store as claimed in one of the claims 1 to 5, characterised in that for the reclassification of the sub-units (e.g. C02, C03, C00 and C01) within the data units (e.g. C0i) which are to be input or output, one single reclassification device (D-UM) is provided which, in dependence upon the direction (e.g. AG) of the data flow, is interposed into the respective data flow path via change-over switches (MUX, DEMUX).

7. A hybrid associative store as claimed in one of the claims 1 to 5 or claim 6, characterised in that separate reclassification devices are provided for normal store operation and for associative store operation.

8. A hybrid associative store as claimed in claim 7, characterised in that the data units which, in the case of associative store operation, are read out from the base store (B-SP) are directly supplied to the associative area (ASS-FL) and that only those results determined by the individual logic-linking units (e.g. ALV1 to ALV4) are reclassified.

9. A hybrid associative store as claimed in one of the claims 1 to 5 or claim 6, characterised in that common reclassification devices (e.g. D-UM) are provided for normal store operation and for associative store operation.

10. A hybrid associative store as claimed in one of the claims 6 to 9, characterised in that the reclassification device (D-UM) comprises a number of distributor switches, which corresponds to the number (e.g. 4) of sub-units per data unit, with a number of output groups – corresponding to the number of sub-units – which forward the sub-units and logic-linking results occurring at the input to the output group in each case identified by the row address for the governing data unit level, where the mutually corresponding output groups are combined via OR-gates.

11. A hybrid associative store as claimed in one of the claims 1 to 10, characterised in that the devices (AD-ST) which serve to select the individual data units in the base store (B-SP) cooperate with a masking control unit (AD-MASK) which specifies the data units which are to be activated consecutively during associative hunting procedures in the desired combination.

12. A hybrid associative store as claimed in claim 11, characterised in that the masking control unit (AD-MASK) comprises a preset address counter (AD-Z) which identifies the start of a selected stores zone in the base store (B-SP) and of a preset mask register (M-REG), containing one bit location in respect of each store row, that the outputs of the mask register (M-REG) are monitored by a priority circuit (PRIO) which, with each store cycle clock signal ($T_{SP}$), in a continuous sequence supplies, in coded form, the subsidiary address (AD2) which is assigned to the respective, analysed input and which, together with the subsidiary address (AD1) made available by the address counter (AD-Z), forms the respective drive address (AD), and that when all the outputs of the mask register (MREG) have been checked by the priority circuit (PRIO), the address counter (AD-Z) and the mask register (M-REG) are reloaded from an address store (AD-SP).

13. A hybrid associative store as claimed in one of the claims 1 to 12, characterised in that the base store (BSP) comprises a plurality of store groups (e.g. MD0 to MD15) which each accommodate a vertical column of data units, where the mutually corresponding store sections for the individual sub-units (e.g. A00, A01, A02, A03) of the data units (e.g. A0i) can be selected in the same way in all the store groups (MD0 to MD15) and data units and identified by the same array address and row address (F-AD/ZAD) in the various store groups (MD0 to MD15) can be selected by a superordinate store group address component (MD-AD), and that in the case of associative operation, by simultaneously activating all the store groups (D0 to MD15), a corresponding number of data units can be simultaneously switched through to the associative area.

14. A hybrid associative store as claimed in claim 13, characterised in that only in the case of associative operation, in respect of each store group (e.g. MD0 to MD15), a separate reclassification device is provided for the data and all the reclassification devices operate in parallel.

15. A hybrid associative store as claimed in claim 14, characterised in that the reclassification devices are arranged at the output of the associative area (ASS-FL) and that in place of the sub-units from the base store (B-SP), the hit displays in respect of each logic-linking unit (ALV . . .) are reclassified whereby the sequence to be adhered to in respect of each data unit is re-established.

16. A hybrid associative store as claimed in claims 13, 14 or 15, characterised in that in order to load and unload the base store (B-SP) by the streaming method, a buffer store (P-SP) is provided which comprises a number of individual stores (e.g. E-SP1 to E-SP4), corresponding to the number of store groups (e.g. MD0 to MD3) in the base store (B-SP), where said individual stores are permanently allocated to the store groups (MD0 to MD3) in the base store (B-SP) and each thereof receives from or emits to the peripheral (PE) a number (e.g. 4) of data units (e.g. A, B, C, D), corresponding to the number of data units which form an array (e.g. $F_n$), and where the individual stores (ES-P1 to E-SP4) are loaded or unloaded consecutively, that in traffic with the base store (B-SP), where an identical array address and row address are set up for the base store, the data units (e.g. A, E, I, M) which correspond to one another in the individual stores (E-SP1 to E-SP4) of the buffer store (P-SP) are each fed consecutively to the associated store group (MD . . .) of the base store (B-SP) or are consecutively read out from the individual store groups (MD0 to MD3) and input consecutively into the associated individual stores (E-SP1 to E-SP4) of the buffer store (P-SP) so that when data transfer takes place between the base store (B-SP) and the buffer store (P-SP) the data units are exchanged for a complete array level ($F_n$) of the base store (B-SP).

17. A hybrid associative store as claimed in claim 16, characterised in that two buffer stores are provided which operate in alternation.

FIG 1

T-AUSW

| ALV 1 | ALV 2 | ALV 3 | ALV 4 | ASS-FL

D-AG

AG○→ WS-AG

MOD AD

AD-ST

D-UM-AG

F-AD0→

| A00 | A01 | A02 | A03 |
| B03 | B00 | B01 | B02 |
| C02 | C03 | C00 | C01 |
| D01 | D02 | D03 | D00 |

Z-AD

F0

F-AD1→

Z-AD

F1        B-SP

F-ADn→

| An0 | Bn0 | Cn0 | Dn0 |
| Dn1 | An1 | Bn1 | Cn1 |
| Cn2 | Dn2 | An2 | Bn2 |
| Bn3 | Cn3 | Dn3 | An3 |

Z-AD

Fn

Z-AD        D-UM-EG

D-EG○

FIG 2

BSP-MD    0      1      2      3

AD

F-AD   Z-AD

x   y

AD-REG

Z-AD

AD-ST   MOD

AD-UM

Z-AD (BSP0)

Z-AD (BSP1)

Z-AD (BSP2)

Z-AD (BSP3)

BZ0
BZ1
BZ2
BZ3
BZ0
BZ1
BZ2
BZ3

F0/1

BZ-AW   BZ-AW   BZ-AW   BZ-AW

F-AD

Z-AD (BSPx)

FIG 3

MOD   Z-AD

"0"

"1"

"2"

"3"

0
1
0
1
0
1
0
1

MUX

SUB 1   Z-AD (BSP0)

SUB 2   Z-AD (BSP 1)

SUB 3   Z-AD (BSP 2)

SUB 4   Z-AD (BSP 3)

Z-AD   MOD   FIG 4

DEMUX | 1  0 |

Z

"0" → "0"
"1" → "1"
"2" → "2"
"3" → "3"

S-REG   TS   OD

→ Z-AD$_{(BSP\ 0)}$
→ Z-AD$_{(BSP\ 1)}$
→ Z-AD$_{(BSP\ 2)}$
→ Z-AD$_{(BSP\ 3)}$

Z-AD   MOD   FIG 5

DEMUX | 1    0 |

"3" "2" "1" "0"

0
1
2
3
0
1
2
3
0
1
2
3
0
1
2
3

MUX   TS   OD

→ Z-AD$_{(BSP\ 0)}$
→ Z-AD$_{(BSP\ 1)}$
→ Z-AD$_{(BSP\ 2)}$
→ Z-AD$_{(BSP\ 3)}$

# FIG 6

# FIG 7

FIG 8

# FIG 9